(19) Europäisches Patentamt
European Patent Office
Office européen des brevets

(11) **EP 4 741 899 A2**

(12) **EUROPEAN PATENT APPLICATION**

(43) Date of publication:
**13.05.2026 Bulletin 2026/20**

(21) Application number: **25212156.1**

(22) Date of filing: **29.10.2025**

(51) International Patent Classification (IPC):
*G02B 6/44* (2006.01)

(52) Cooperative Patent Classification (CPC):
**G02B 6/44465; G02B 6/445**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.11.2024 US 202463717367 P**

(71) Applicant: **Corning Research & Development Corporation**
**Corning, New York 14831 (US)**

(72) Inventors:
• **GAUDYNSKA, Martha Eliza**
**93-142 Lodz (PL)**
• **KLAK, Robert Tomasz**
**98220 Zdunska Wola (PL)**
• **KUKIAN, Przemyslaw Andrzej**
**92-417 Lodz (PL)**
• **ORLOWSKI, Karol Pawel**
**92-701 Moskwa (PL)**

(74) Representative: **Reddie & Grose LLP**
**The White Chapel Building**
**10 Whitechapel High Street**
**London E1 8QS (GB)**

(54) **FIBER OPTIC TERMINAL HAVING A PERIMETER SEAL AND METHOD OF MAKING AND USING SAME**

(57)     A fiber optic terminal having a perimeter seal includes a base and a cover connected to the base between opened and closed positions. The base and cover define an interior volume having a perimeter in which fiber optic components are disposed. The fiber optic terminal further includes a rigid member extending from one of the base or cover and a flexible rib extending from the other of the base or cover. Each of the rigid member and flexible rib is configured to partially bound the interior volume along a portion of the perimeter. When the cover is in the closed position, the flexible rib engages the rigid member to form a seal around the portion of the perimeter to protect the fiber optic components. A method of manufacturing the fiber optic terminal and a method of using the fiber optic terminal having the perimeter seal are also disclosed.

FIG. 9

**Description**

**Priority Application**

This application claims the benefit of priority of U.S. Provisional Application No. 63/717,367, filed on November 7, 2024, the content of which is relied upon and incorporated herein by reference in its entirety

**Technical Field**

This disclosure relates generally to fiber optics, and more particularly to fiber optic terminals for use with fiber optic networks having an improved seal for protecting fiber optic components disposed in the fiber optic terminals.

**Background**

Optical fibers are used in a wide variety of applications, most commonly as part of the physical layer of a communication protocol through which network nodes communicate over a data network. Optical fibers offer several benefits, including wide bandwidth and low noise operation. A passive optical network (PON) is a type of optical distribution network that is comprised entirely of passive optical components. The continued growth of the Internet has resulted in a corresponding increase in demand for network capacity and reliability. This demand has, in turn, caused carriers to extend their PONs closer to end users. This extension of optical fiber toward the ends of the network (e.g., node, curb, building, home, etc.) is commonly referred to as Fiber-To-The-x (FTTx).

In one such network configuration, carriers desire to extend their PONs all the way to network equipment in the home. This type of extension of carrier PONs may be referred to as Fiber-To-The-Home (FTTH). FTTH in particular has been recognized by governments around the world as an essential digital infrastructure to support economic growth across urban and rural areas. Presently, FTTH reaches less than 50% of homes in the United States. Equipping more homes with optical fibers will require innovative and lower-cost technologies for both dense urban and remote communities.

Furthermore, to provide optical connectivity to homes, for example, the optical fibers of a main trunk cable are often spliced to optical fibers of drop cables that are coupled to the network equipment in a home. For this coupling, a fiber optic terminal may be positioned relatively close to where a fiber optic cable enters the home. For example, a fiber optic terminal may be mounted or otherwise positioned in the basement of a home or on or near an exterior wall of the home. In either case, the fiber optic terminal is exposed to environmental factors (e.g., dust, water, etc.) that are unfriendly to fiber optic components located within the fiber optic terminal. To protect the fiber optic components from environmental factors, at least a portion of an interior of the fiber optic terminal is sealed-typically using an elastomeric material (e.g., rubber or the like).

While elastomeric materials have been generally successful at providing the desired seal, elastomeric materials suffer from several drawbacks. One drawback of elastomeric materials is wear and degradation over time which can reduce the effectiveness of the seal. Further, inclusion of an elastomeric material in a fiber optic terminal results in higher manufacturing costs at least because the elastomeric material must be separately manufactured and mounted during the fiber optic terminal assembly process.

In view of the above, and as the pace of optical fiber demand accelerates, there is a growing need for a perimeter seal for a fiber optic terminal that does not make use of an elastomeric material.

**Summary**

Certain exemplary aspects of the invention are set forth below. It should be understood that these aspects are presented merely to provide the reader with a brief summary of certain forms the invention might take and that these aspects are not intended to limit the scope of the invention.

In one aspect of the disclosure, a fiber optic terminal having an improved perimeter seal is disclosed. The fiber optic terminal includes a base and a cover moveably connected to the base between an opened position and a closed position. In the closed position, the base and the cover define an interior volume having a perimeter in which one or more fiber optic components are configured to be disposed. The fiber optic terminal further includes a rigid member integrated with and extending from one of the base or the cover and a flexible rib integrated with and extending from the other of the base or the cover. Each of the rigid member and the flexible rib is configured to at least partially bound the interior volume along at least a portion of the perimeter when the cover is in the closed position. When the cover is in the closed position, the flexible rib is configured to engage the rigid member to form a seal around the at least a portion of the perimeter of the interior volume to protect the one or more fiber optic components disposed therein.

In one embodiment, the flexible rib has a height, and the height of the flexible rib may vary along a length of the flexible rib that extends from the other of the base or cover. By way of example, the length of the flexible rib may include a corner portion having a first height and a non-corner portion having a second height, and the first height may be greater than the second height. In one embodiment, the first height of the flexible rib may be approximately double the second height of the flexible rib.

In one embodiment, the flexible rib may be configured to deform against the rigid member when the cover is in the closed position to form the seal. In this embodiment, the maximum deflection of the flexible rib at each location along its length may be configured to be substantially constant. By way of example, in one embodiment, the maximum deflection of the flexible rib at each location along its length may be approximately 0.6 mm. This amount of deflection in the flexible rib is configured to ensure a good seal along the portion of the perimeter of the interior cavity.

In one embodiment, the base may include the rigid member and the cover may include the flexible rib. In an alternative embodiment, however, the base may include the flexible rib and the cover may include the rigid member.

In one embodiment, the seal between the rigid member and the flexible rib is configured to be formed from relatively rigid materials. This is in contrast to using a relatively soft material, such as an elastomeric material, to form at least one of the rigid member and the flexible rib. For example, in one embodiment, a Young's modulus of each of the rigid member and the flexible rib may be greater than approximately 0.1 GPa. In a more preferred embodiment, the Young's modulus of each of the rigid member and the flexible rib may be greater than approximately 1.0 GPa. In this way, no intermediary material has to be located between the rigid member and the flexible rib to form the seal around the at least the portion of the perimeter of the interior volume of the of the fiber optic terminal. For example, no elastomeric material has to be used in forming the seal around the at least the portion of the perimeter of the interior volume of the fiber optic terminal.

In one embodiment, the flexible rib may include a proximal end adjacent the other of the base or the cover and a distal end opposite the proximal end, and a thickness of the flexible rib may be greater at the proximal end than at the distal end. The change in geometry, as opposed to the hardness/softness of the material, may allow the flexible rib to deform at its distal end more easily as compared to its proximal end. In essence, the deformation biases the flexible rib against the rigid member to form the seal.

In one embodiment, an angle between the flexible rib and the other of the base or cover from which the flexible rib extends may be greater than 90 degrees when the flexible rib is undeformed, e.g., not pressed against the rigid member, such as when the cover is in the opened position. This change in geometry is configured to urge the deformation of the flexible rib in a preferred direction, such as to the outboard side of the rigid member when the cover is in the closed position. Additionally, the flexible rib may include at least one fillet at a proximate end of the flexible rib where the flexible rib meets the other of the base or the cover. A ratio of a radius of curvature of the at least one fillet to a thickness of the flexible rib may be greater than or equal to approximately 0.5.

In another aspect of the disclosure, a method of manufacturing a fiber optic terminal having an improved seal is disclosed. The method includes forming a base and forming a cover configured to be movably connected to the base between a closed position and an opened position. In the closed position, the base and the cover define an interior volume having a perimeter in which one or more fiber optic components are configured to be disposed. The method further includes forming a rigid member integrated with and extending from one of the base or the cover and forming a flexible rib integrated with and extending from the other of the base or the cover. Each of the rigid member and the flexible rib is configured to at least partially bound the interior volume along at least a portion of the perimeter when the cover is in the closed position. The rigid member and the flexible rib are formed such that when the cover is in the closed position, the flexible rib is configured to engage the rigid member to form a seal around the at least a portion of the perimeter of the interior volume to protect the one or more fiber optic components disposed therein.

In one embodiment, forming the flexible rib may include forming the flexible rib to have a corner portion with a first height and a non-corner portion with a second height, where the first height may be greater than the second height. For example, in one embodiment, the first height may be about double the second height.

In one embodiment, forming the flexible rib may include forming the flexible rib such that in the closed position, the flexible rib deforms against the rigid member such that the maximum deflection of the flexible rib at each location along its length may be substantially constant. For example, in one embodiment, the maximum deflection of the flexible rib at each location along its length may be about 0.6 mm.

In one embodiment, forming the rigid member and the flexible rib may include forming the rigid member in the base and forming the flexible rib in the cover. In another embodiment, however, forming the rigid member and the flexible rib may include forming the rigid member in the cover and forming the flexible rib in the base.

In one embodiment, forming the rigid member and the flexible rib may include forming the rigid member and the flexible rib such that a Young's modulus of each of the rigid member and the flexible rib may be greater than approximately 0.1 GPa. More preferably, in one embodiment, forming the rigid member and the flexible rib may include forming the rigid member and the flexible rib such that a Young's modulus of each of the rigid member and the flexible rib may be greater than approximately 1.0 GPa. Thus, in this embodiment, the deformation of the flexible rib may be prompted more by its geometry rather than the stiffness of the material from which the flexible rib is formed.

In one embodiment, forming the flexible rib may include forming the flexible rib with a proximal end adjacent the other of the base or cover from which it extends and a distal end opposite the proximal end, and wherein a thickness of the flexible rib may be greater at the proximal end than at the distal end.

In one embodiment, forming the flexible rib may include forming the flexible rib such that an angle between the flexible rib and the other of the base or cover from which the flexible rib extends may be greater than 90 degrees when the flexible rib is undeformed, e.g., not pressed against the rigid member, such as when the cover is in the opened position. As noted above, this is configured to urge the flexible rib to defect in a preferred direction, such as to the outboard side of the rigid member when the cover is in the closed position. Additionally, forming the flexible rib may include forming the flexible rib such that the flexible rib includes at least one fillet at a proximate end of the flexible rib where the flexible rib meets the other of the base or the cover. TA ratio of a radius of curvature of the at least one fillet to a thickness of the flexible rib may be greater than or equal to approximately 0.5.

In one embodiment, forming the rigid member and the flexible rib may include forming the rigid member and the flexible rib such that in the closed position, no intermediary material is located between the rigid member and the flexible rib to form the seal around the at least the portion of the perimeter of the interior volume of the fiber optic terminal. For example, no elastomeric material may be located between the rigid member and the flexible rib to form the seal around the at least the portion of the perimeter of the interior volume of the fiber optic terminal.

In a third aspect of the disclosure, a method of using a fiber optic terminal according to the first aspect described above is disclosed. The method includes providing the fiber optic terminal according to the first aspect, disposing one or more fiber optic components in the interior volume of the fiber optic terminal when in the opened position, and moving the cover from the opened position to the closed position such that the flexible rib engages the rigid member to form a seal around the at least a portion of the perimeter of the interior volume to protect the one or more fiber optic components disposed therein.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims. Further, it will be understood that the various embodiments and aspects described above can be combined in any combination or sub-combination without departing from the scope of this disclosure.

## Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.

Fig. 1 is a schematic view illustrating an exemplary FTTx carrier network.

Fig. 2 is a schematic view of an exemplary FTTH network in an MDU.

Fig. 3 is a front isometric view of an embodiment of a fiber optic terminal for use in or on an MDU according to an aspect of the disclosure.

Fig. 4 is a back isometric view of a cover of the fiber optic terminal of Fig. 3.

Fig. 5 is a side cross-sectional view of the cover of Fig. 4.

Fig. 6 is a top cross-sectional view of the cover of Fig. 4, looking down.

Fig. 6A is a top cross-sectional detail view of a portion of the cover of Fig. 6.

Fig. 7 is a top cross-sectional view of the cover of Fig. 4, looking up.

Fig. 8 is a front isometric view of a base of the fiber optic terminal of Fig. 3.

Fig. 9 is a side cross-sectional view of the fiber optic terminal of Fig. 3.

## Detailed Description

Various embodiments will be further clarified by examples in the description below. In general, the description relates to a fiber optic terminal for use in, on, or near a multi-dwelling unit (MDU), for example, and methods of manufacturing and using the same. The disclosed fiber optic terminal achieves a perimeter seal of at least a portion of an interior volume of the fiber optic terminal without use of an elastomeric material (e.g., rubber or the like). Specifically, the disclosed fiber optic terminal relies on contact between two elements integrally formed with portions of the fiber optic terminal and the elastic (bending) properties of cantilevered geometry to achieve an effective perimeter seal. Advantageously, manufacturing the disclosed fiber optic terminal requires less production time and resources than known fiber optic terminals that typically use elastomeric materials to achieve a perimeter seal. Thus, the disclosed fiber optic terminal advantageously provides significant cost savings at least due to lower manufacturing costs. These and other benefits of the disclosure will be described in additional detail below.

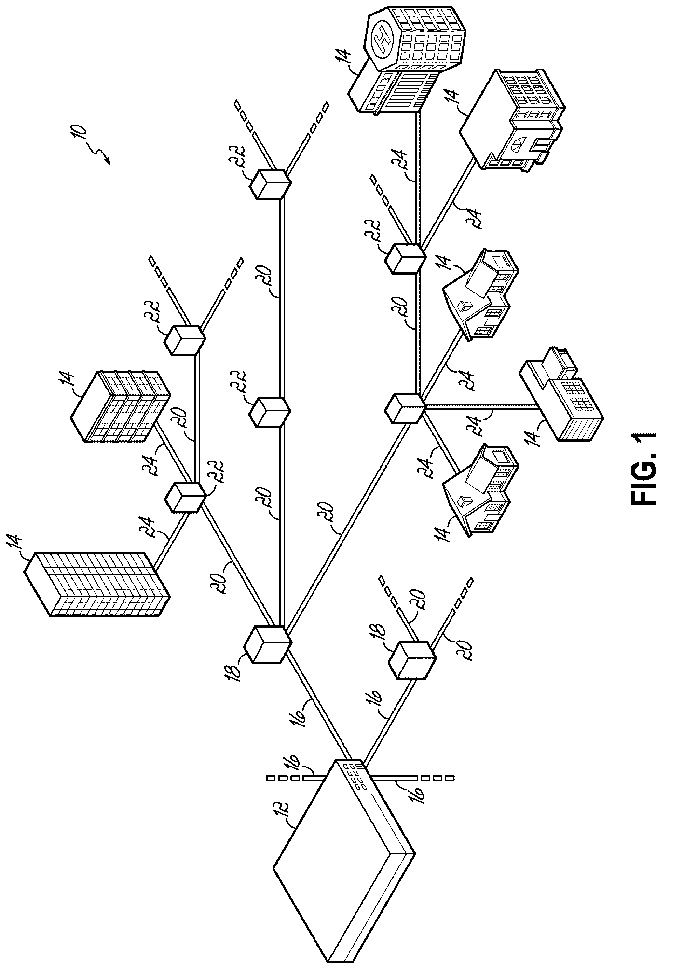

Referring now to the Figures, Fig. 1 depicts an exemplary FTTx carrier network 10 that distributes optical signals generated at a switching point 12 (e.g., a central office) to one or more subscriber premises 14. Optical line terminals (OLTs - not shown) at the switching point 12 convert electrical signals into optical signals. Fiber optic feeder cables 16 then carry the optical signals to various local convergence points 18. The convergence points 18 act as locations for making cross-connections and interconnections (e.g., by splicing or patching cables). The local convergence points 18 often include splitters or wavelength-division multiplexing (WDM) components to enable any given optical fiber in the feeder cable 16 to serve multiple subscriber premises 14. As a result, the optical signals are "branched out" from the optical fibers of the feeder cables 16 to optical fibers of fiber optic distribution cables 20 that exit the local convergence points 18.

At remote network access points 22 closer to the subscriber premises 14, some or all of the optical fibers in the distribution cables 20 may be accessed to connect to one or more subscriber premises 14. Drop cables 24 extend from the network access points 22 to the subscriber premises 14, which may be single-dwelling units (SDU), multi-dwelling units (MDU), businesses, and/or other facilities or buildings. An optical network terminal (ONT - not shown) located at or inside the subscriber premises 14 receives one or more optical signals and converts the optical signals back to electrical signals at the remote distribution points or subscriber premises 14.

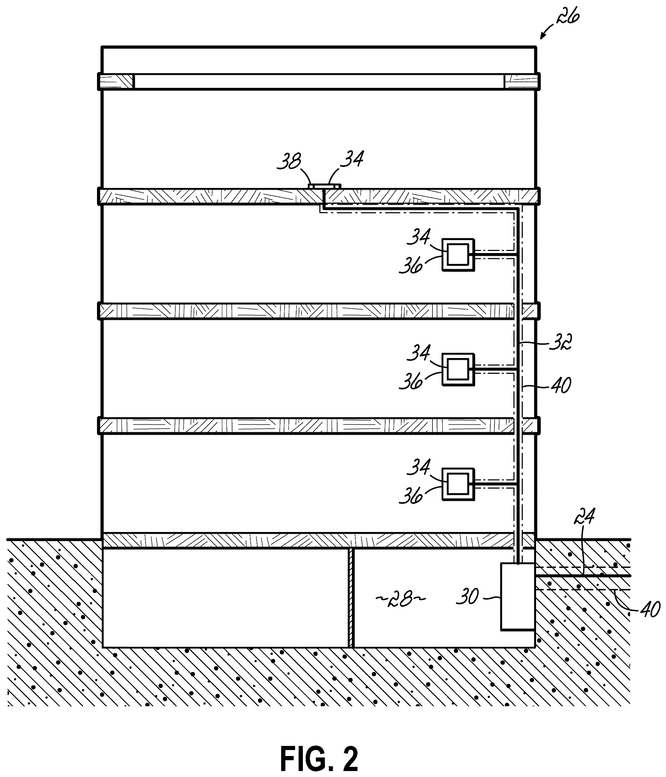

Referring now to Fig. 2, one embodiment of an FTTx network is a FTTH network, which provides optical fiber to a home, such as a SDU, an MDU, or the like. Fig. 2 illustrates an exemplary MDU 26. As illustrated in Fig. 2, the drop cable 24 from a network access point 22 generally enters the MDU 26 at a basement or lower floor having a room 28 with one or more cabinets, closures, or other fiber optic terminals 30 for holding network equipment (not shown). Fiber optic cables 32 connect the network equipment in the one or more terminals 30 to network equipment 34 associated with various subscribers throughout the MDU 26. By way of example and without limitation, the network equipment 34 may include wall panels 36 on the various levels of the MDU 26 and/or floor panels 38.

To protect the cables 24, 32 from damage during installation, construction, and general maintenance, the cables 24, 32 are typically enclosed in ductwork 40 (shown in phantom in Fig. 2) that defines pathways between the remote network access point 22 and the MDU 26, for example. Further, the ductwork 40 may define pathways from the room 28 into which cables 24 enter the MDU 26 and the network equipment 34 within the MDU 26, as shown. To that end, any of the fiber optic cables 20, 24, 32 may be routed through the ductwork 40 for connection at local convergence points 18, network access points 22, terminals 30, and/or network equipment 34, for example.

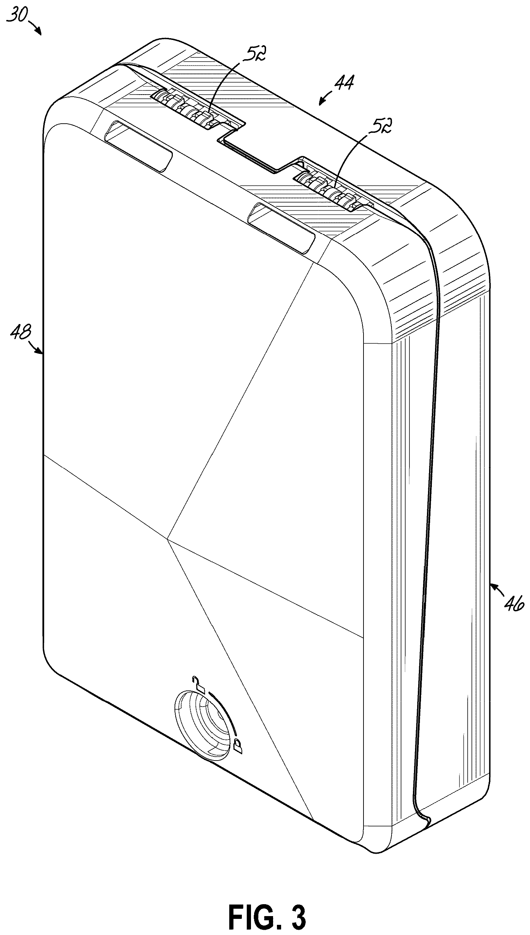

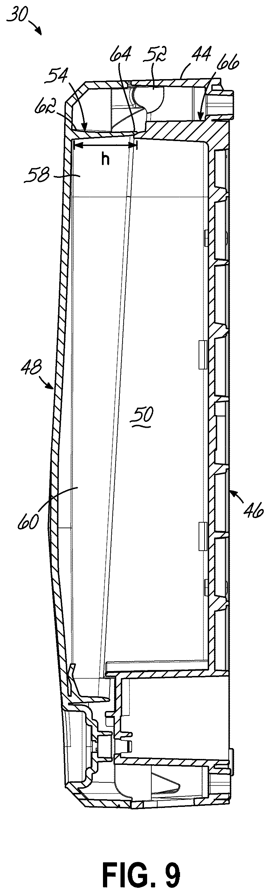

Referring now to Fig. 3, the Figure illustrates an exemplary fiber optic terminal 30. In the provided example, the fiber optic terminal 30 is an MDU terminal, that may be deployed at a subscriber premises 14. The fiber optic terminal 30 may include a housing 44 having a back or base 46 and a cover 48. The cover 48 may be moveably connected to the base 46 between an opened position and closed position. In the closed position (as shown in Fig. 3), the base 46 and cover 48 may together define an interior volume 50 (Fig. 9) having a perimeter in which one or more fiber optic components (not shown) may be disposed and protected from the external environment. The fiber optic terminal 30 may protect the fiber optic components from dust and/or water, for example. In some example embodiments, such as the embodiment shown in Fig. 3, the base 46 and the cover 48 may be connected by a hinge 52 to enable access to the interior volume 50 of the fiber optic terminal 30. The fiber optic terminal 30 may further include one or more input cables (not shown) and may include one or more output cables (not shown), as referenced in Fig. 2.

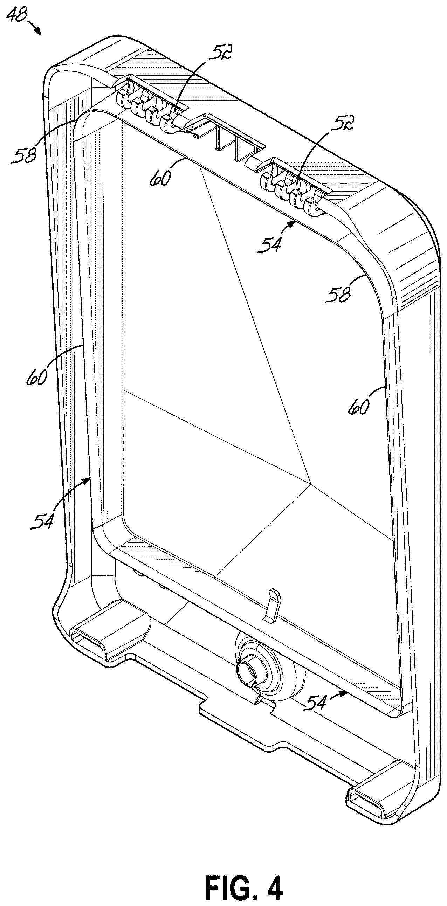

Referring now to Fig. 4, the Figure shows an embodiment of the cover 48 of the housing 44 of the fiber optic terminal 30. The cover 48 is hingedly connected to the base 46 when the fiber optic terminal 30 is assembled. It should be understood that, in alternative embodiments, the cover 48 may be secured to the base 46 in an alternative manner. In the depicted embodiment, the cover 48 includes a substantially flexible rib 54 integrated with and extending away from the cover 48 in a direction towards the base 46 when the cover 48 and the base 46 are secured together in the closed position. In alternative embodiments, the flexible rib 54 may instead be integrated with the base 46 instead of the cover 48. Further alternatively, both the base 46 and the cover 48 may feature a flexible rib 54. As used herein, the term "flexible" applies to a portion of the seal (i.e., the rib 54) that deforms more than or equal to 0.1 mm, preferably more than about 0.2 mm, and more preferably more than about 0.5 mm when the cover 48 is in the closed position.

The flexible rib 54 of the cover 48 at least partially bounds the interior volume 50 along at least a portion of the perimeter when the cover 48 is in the closed position. As shown, the flexible rib 54 circumscribes and thus bounds a portion of the interior volume 50 in at least one dimension. The portion of the interior volume 50 is also bound in another dimension by a surface of the cover 48. As will be described in greater detail below, the flexible rib 54 of the cover 48 cooperates with aspects of the base 46 to form a seal around at least a portion of the interior volume 50 of the fiber optic terminal 30 to protect the fiber optic components within the interior volume 50 of the fiber optic terminal 30 from environmental factors such as dust and/or water.

With continued reference to Fig. 4, the flexible rib 54 is formed (e.g., by injection molding or the like) simultaneously with the cover 48. Advantageously, because the flexible rib 54 is integral with and formed simultaneously with the cover 48, no additional assembly is necessary. In contrast, known fiber optic terminals make use of elastomeric materials (e.g., rubber or the like) to achieve a perimeter seal. The elastomeric material must be separately manufactured and mounted during the fiber optic terminal assembly process which increases manufacturing costs. The elimination of the elastomeric material from the fiber optic terminal simplifies assembly and reduces manufacturing and materials costs.

The flexible rib 54 and the cover 48 may be made of the same material. To achieve a balance of strength and flexibility, the Young's modulus of the material of the flexible rib 54 (and the cover 48) may be greater than approximately 0.1 GPa. More particularly, the Young's modulus of the material of the flexible rib 54 (and the cover 48) may be on the order of magnitude of approximately 1.0 GPa. For example, the flexible rib 54 (and the cover 48) may be made of acrylonitrile styrene acrylate (ASA) polymers, such as Luran® S (commercially available from INEOS Styrolution), or other polycarbonate (PC) and/or ASA blends. It should be understood that other suitable materials may alternatively be used. Use of this material or use of a material with a Young's modulus as described above allows for the flexible rib 54 to undergo controlled elastic deformation to form a seal around an interior volume 50 of the fiber optic terminal 30.

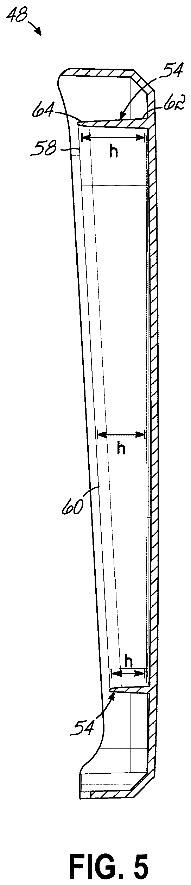

Referring now to Figs. 5-7, the Figures show various cross-sections of the cover 48. As best shown in Fig. 5, a height h of the flexible rib 54 relative to the cover 48 varies along the length of the flexible rib 54. In other words, the flexible rib 54 may be taller or shorter (with the height h measured from where the flexible rib 54 extends from the cover 48) at various positions along the length of the flexible rib 54 along the perimeter of the interior volume 50. As explained in greater detail below, the height h of the flexible rib 54 may be greater at a corner portion 58 of the flexible rib 54 than at a non-corner portion 60 (e.g., straight segment portion) of the flexible rib 54 depending on the local stiffness of the flexible rib 54. In other words, the flexible rib 54 may have a first height $h_1$ at a corner portion 58 that is greater than a second height $h_2$ at a non-corner portion 60. More particularly, the first height $h_1$ of the flexible rib 54 at the corner portion 58 may be approximately double the second height $h_2$ of the flexible rib 54 at the non-corner portion 60. For example, the height $h_1$ of the flexible rib 54 at the corner portion 58 may be approximately 18 mm or 21 mm and the height $h_2$ of the flexible rib 54 at the non-corner portion 60 may be approximately 9 mm or 10 mm. To determine the minimum height h required for the flexible rib 54 to deflect by the desired amount, the snap fit design equation (Equation 1, below) was employed.

$$\varepsilon = \frac{3Yt}{2h^2} \qquad\qquad (1)$$

Where $\varepsilon$ is the dynamic strain on the beam, Y is the maximum deflection of the beam, t is the thickness of the beam, and $h$ is the height of the beam.

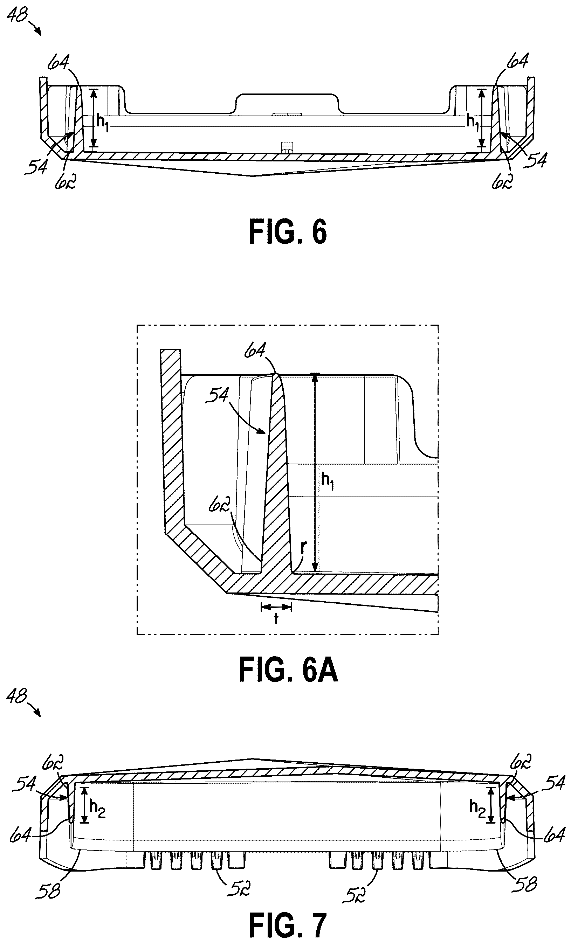

Referring again to Figs. 5-7, the Figures illustrate aspects of the flexible rib 54. In the depicted embodiment, the flexible rib 54 is connected (e.g., integrally formed) to the cover 48 at a proximal end 62 of the flexible rib 54. As noted above, in other embodiments, the flexible rib 54 may instead be connected (e.g., integrally formed) to the base 46. To reduce stress concentration on the connection between the proximal end 62 of the flexible rib 54 and the cover 48, the interior and/or exterior corners of the flexible rib 54 may include fillets (as shown in Fig. 6A). The fillets may have a radius of curvature r of greater than approximately 0.5 mm. It should be understood that radius of curvature r of the fillets may vary. Particularly, the radius of curvature r of the interior and exterior corners of the flexible rib 54 may be different. Further, the radius of curvature r of the fillets may vary depending on the height h or the thickness t of the flexible rib 54. For example, a ratio of the radius of curvature r of the fillet to the thickness $t$ of the flexible rib 54 (i.e., $r/t$) may be greater than or equal to approximately 0.5. Opposite the proximal end 62, the flexible rib 54 includes a distal end 64. A distance between the proximal end 62 and the distal end 64 is the height h of the flexible rib 54. A cross-sectional dimension (e.g., a thickness) of the flexible rib 54 at the proximal end 62 may be greater than the cross-sectional dimension (e.g., thickness) of the flexible rib 54 at the distal end 64. In other words, the flexible rib 54 narrows in thickness, for example, in a direction extending away from the cover 48.

Further, an angle between the flexible rib 54 and the cover 48 may be greater than 90 degrees, e.g., when not in engagement with the rigid member, such as when the cover 48 is in the opened position. For example, the angle between the flexible rib 54 and the cover 48 may be approximately 93 degrees. This angling of the flexible rib 54 urges the flexible rib 54 in a preferred direction when the flexible rib 54 becomes deformed. For example, the flexible rib 54 may be directed in an outboard direction (e.g., in a direction away from an interior volume 50 of the fiber optic terminal 30 when the cover 48 is in the closed position) when deformed. Geometry of the flexible rib 54 was selected to meet requirements of and ensure operation within the elastic deformation range with a deflection force of less than 120 N over a 600 mm distance. The narrowing of the flexible rib 54 in a direction away from the cover 48 and the angle at which the flexible rib 54 extends from the cover 48 allows the flexible rib 54 to deform in a controlled manner in such a way as to form an effective seal together with aspects of the base 46 around at least a portion of the perimeter of the interior volume 50 of the fiber optic terminal 30.

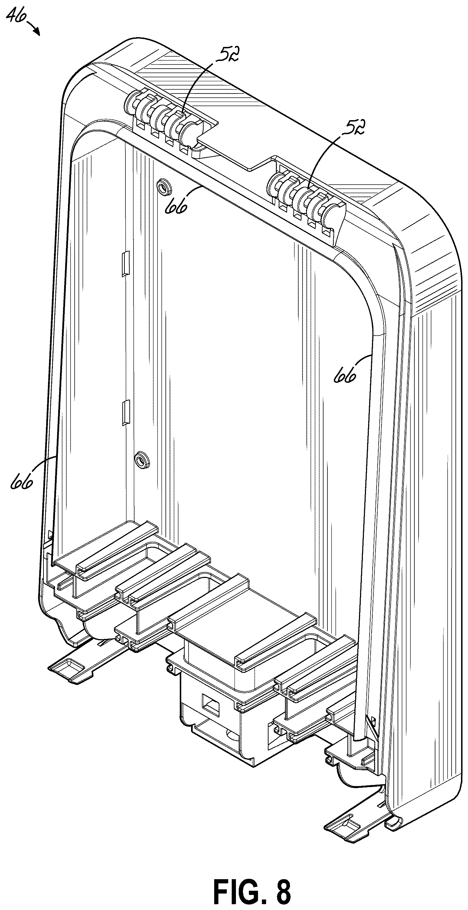

Referring now to Fig. 8, the Figure shows an embodiment of the base 46 of the housing 44 of the fiber optic terminal 30. The base 46 is hingedly connected to the cover 48 when the fiber optic terminal 30 is assembled. It should be understood that, in an alternative embodiment, the base 46 may be secured to the cover 48 in an alternative manner. Further, the base 46 may be secured to an interior (as shown in Fig. 2, for example) or exterior wall of an MDU 26 or to a surface of a structure near to an MDU, for example. In the depicted embodiment, the base 46 includes a substantially rigid member 66 integrated with and extending away from the base 46 in a direction towards the cover 48 when the base 46 and the cover 48 are secured together in the closed position. In alternative embodiments, the rigid member 66 may instead be integrated with the cover 48 instead of the base 46. Further alternatively, neither the base 46 nor the cover 48 may feature a rigid member 66. As used herein, the term "rigid" applies to a portion of the seal (i.e., the member 66) that deforms less than 0.1 mm and preferably less than about 0.05 mm when the cover 48 is in the closed position.

The rigid member 66 of the base 46 at least partially bounds the interior volume 50 along at least a portion of the perimeter when the cover 48 is in the closed position. As shown, the rigid member 66 circumscribes and thus bounds a portion of the interior volume 50 in at least one dimension. The portion of the interior volume 50 is also bound in another dimension by a surface of the base 46. As will be described in greater detail below, the rigid member 66 of the base 46 cooperates with the flexible rib 54 of the cover 48 to form a seal around at least a portion of the interior volume 50 of the fiber optic terminal 30 to protect the fiber optic components within the interior volume 50 of the fiber optic terminal 30 from environmental factors such as dust and/or water.

With continued reference to Fig. 8, the rigid member 66 is formed (e.g., by injection molding or the like) simultaneously with the base 46. Advantageously, because the rigid member 66 is integral with and formed simultaneously with the base 46, no additional assembly is necessary. In contrast, known fiber optic terminals make use of elastomeric materials (e.g., rubber or the like) to achieve a perimeter seal. The elastomeric material must be separately manufactured and mounted during the fiber optic terminal assembly process which increases manufacturing costs. The elimination of the elastomeric material from the fiber optic terminal reduces manufacturing and materials costs.

The rigid member 66 and the base 46 may be made of the same material. Like the flexible rib 54 and the cover 48, to achieve a balance of strength and flexibility, the Young's modulus of the material of the rigid member 66 (and the base 46) may be greater than approximately 0.1 GPa. More particularly, the Young's modulus of the material of the rigid member 66 (and the base 46) may be on the order of magnitude of approximately 1.0 GPa. For example, the rigid member 66 (and the base 46) may be made of acrylonitrile styrene acrylate (ASA) polymers, such as Luran® S (commercially available from INEOS Styrolution), or other polycarbonate (PC) and/or ASA blends. It should be understood that other suitable materials may alternatively be used. Further, the flexible rib 54, cover 48, rigid member 66, and base 46 may all be made of the same material. Alternatively, the flexible rib 54 and the cover 48, for example, may be made of one material and the rigid member 66 and base 46, for example, may be made of a different material.

Referring now to Fig. 9, the Figure shows a cross-sectional view of the assembled fiber optic terminal 30 with the cover 48 in the closed position. Specifically, Fig. 9 shows an interface between the flexible rib 54 of the cover 48 and the rigid member 66 of the base 46 (in the depicted embodiment) to form a seal around at least a portion of the interior volume 50 of the fiber optic terminal 30. As shown, no intermediary material is located between the flexible rib 54 and the rigid member 66. Specifically, no elastomeric material (e.g., rubber or the like) is located between the flexible rib 54 and the rigid member 66. As mentioned above, the elimination of the elastomeric material from the fiber optic terminal 30 reduces manufacturing and materials costs without sacrificing performance of the seal.

Further, forming the seal through direct contact between the flexible rib 54 and the rigid member 66 provides for better structural integrity of the fiber optic terminal 30. Deforming an elastomeric material to fill gaps and form a seal, as is the case of known fiber optic terminals, results in the elastomeric material opposing the applied compressive force. This opposing force provided by the elastomeric material may be sufficient to prevent the known fiber optic terminal from closing or cause the known fiber optic terminal to spring open spontaneously. Such is less than desirable. In contrast, the controlled deformation of the flexible rib 54 in the disclosed fiber optic terminal 30 does not suffer from the same potential issues.

With continued reference to Fig. 9, a seal around at least a portion of the interior volume 50 is formed by direct contact between the flexible rib 54 and the rigid member 66. Particularly, upon application of a force (e.g., applied when closing the fiber optic terminal 30), the flexible rib 54 contacts the rigid member 66 and undergoes controlled and calculated deformation (without surpassing maximum stress thresholds) against the rigid member 66 to form a seal around at least a portion of the interior volume 50 of the fiber optic terminal 30. The seal around the interior volume 50 serves to protect the one or more fiber optic components within the interior volume 50 from environmental factors such as dust and/or water.

Factors that can influence the required closing force include: tolerance influence, surface roughness, inclination angle, and the angle of terminal corners of interior volume 50. In some embodiments, the seal complies with the IP55 standard. In alternative embodiments, the seal complies with the IP65 standard. In further embodiments, the seal may comply with more or less stringent sealing standards.

To maintain a consistent seal around at least a portion of the interior volume 50 of the fiber optic terminal 30 (accounting for varying cover 48 positions within an accepted tolerance range), a maximum deflection of the flexible rib 54 is maintained substantially constant around the portion of the interior volume 50 that is sealed against environmental factors. In the depicted embodiment, the maximum deflection of the flexible rib 54 around the sealed portion of the interior volume 50 is approximately 0.6 mm. It is to be understood that the maximum deflection of the flexible rib 54 may be greater or less than 0.6 mm. To achieve a substantially constant maximum deflection around a portion of the interior volume 50, a height h of the flexible rib 54 around the sealed portion of the perimeter of the interior volume 50 is varied (as described above).

With continued reference to Fig. 9, variation in height h of the flexible rib 54 is used to maintain the substantially constant maximum deflection. This is because the behavior under load of the flexible rib 54 is different at the corner portion 58 than at the non-corner portion 60, for example. More particularly, the curved geometry of the flexible rib 54 at the corner portion 58 results in a non-uniform stress distribution and higher stiffness against certain applied loads. This typically results in reduced deflection (or bending) of the flexible rib 54 at the corner portion 58 in comparison to the flexible rib 54 at the non-corner portion 60, for example. Thus, to achieve a substantially constant maximum deflection around the sealed portion of the interior volume 50, a height h of the flexible rib 54 is greater at the corner portion 58 than at the non-corner portion 60. A similar effect could be achieved by varying the thickness of the flexible rib 54, for example. It is to be understood that other aspects of the flexible rib 54 may additionally or alternatively be varied to maintain a constant maximum deflection around the sealed portion of the interior volume 50.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

**Claims**

1.  A fiber optic terminal, comprising:

    a base;
    a cover moveably connected to the base between an opened position and a closed position, wherein in the closed position, the base and the cover define an interior volume having a perimeter in which one or more fiber optic components are configured to be disposed;
    a rigid member integrated with and extending from one of the base or the cover, wherein the rigid member is configured to at least partially bound the interior volume along at least a portion of the perimeter when the cover is in the closed position; and
    a flexible rib integrated with and extending from the other of the base or the cover, wherein the flexible rib is configured to at least partially bound the interior volume along the at least a portion of the perimeter when the cover is in the closed position,
    wherein when the cover is in the closed position, the flexible rib is configured to engage the rigid member to form a seal around the at least a portion of the perimeter of the interior volume to protect the one or more fiber optic components.

2.  The fiber optic terminal of claim 1, wherein the flexible rib has a height, and wherein the height of the flexible rib varies along a length of the flexible rib.

3.  The fiber optic terminal of claim 2, wherein the length of the flexible rib includes a corner portion having a first height and a non-corner portion having a second height, and wherein the first height is greater than the second height.

4.  The fiber optic terminal of claim 3, where the first height of the flexible rib is approximately double the second height of the flexible rib.

5. The fiber optic terminal of any of the preceding claims, wherein the flexible rib deforms against the rigid member when the cover is in the closed position, and wherein the maximum deflection of the flexible rib at each location along its length is substantially constant.

6. The fiber optic terminal of claim 5, wherein the maximum deflection of the flexible rib at each location along its length is approximately 0.6 mm.

7. The fiber optic terminal of any of the preceding claims, wherein the base includes the rigid member and the cover includes the flexible rib.

8. The fiber optic terminal of any of the preceding claims, wherein a Young's modulus of each of the rigid member and the flexible rib is greater than approximately 0.1 GPa.

9. The fiber optic terminal of any of the preceding claims, wherein the Young's modulus of each of the rigid member and the flexible rib is greater than approximately 1.0 GPa.

10. The fiber optic terminal of any of the preceding claims, wherein the flexible rib includes a proximal end adjacent the other of the base or the cover and a distal end opposite the proximal end, and wherein a thickness of the flexible rib is greater at the proximal end than at the distal end.

11. The fiber optic terminal of any of the preceding claims, wherein an angle between the flexible rib and the other of the base or cover from which the flexible rib extends is greater than 90 degrees.

12. The fiber optic terminal of any of the preceding claims, wherein the flexible rib includes at least one fillet at a proximate end of the flexible rib where the flexible rib meets the other of the base or the cover, and wherein a ratio of a radius of curvature of the at least one fillet to a thickness of the flexible rib is greater than or equal to approximately 0.5.

13. The fiber optic terminal of any of the preceding claims, wherein when the cover is in the closed position, no intermediary material is located between the rigid member and the flexible rib to form the seal around the at least the portion of the perimeter of the interior volume.

FIG. 1

**FIG. 2**

**FIG. 3**

FIG. 4

48

64

54

62

58

h

h

60

h

54

## FIG. 5

**FIG. 6**

**FIG. 6A**

**FIG. 7**

**FIG. 8**

**FIG. 9**

**REFERENCES CITED IN THE DESCRIPTION**

**Patent documents cited in the description**

- US 63717367